**Europäisches Patentamt**

**European Patent Office**

**Office européen des brevets**

(11) Veröffentlichungsnummer: **0 254 768**
**B1**

(12) **EUROPÄISCHE PATENTSCHRIFT**

(45) Veröffentlichungstag der Patentschrift:
27.06.90

(51) Int. Cl.⁵: **B23G 1/18**

(21) Anmeldenummer: **86114108.3**

(22) Anmeldetag: **11.10.86**

(54) Gewindebohrmaschine.

(30) Priorität: 28.07.86 DE 3625503

(43) Veröffentlichungstag der Anmeldung:
03.02.88 Patentblatt 88/5

(45) Bekanntmachung des Hinweises auf die Patenterteilung:
27.06.90 Patentblatt 90/26

(84) Benannte Vertragsstaaten:
CH FR GB LI

(56) Entgegenhaltungen:
EP-A- 0 062 681
CH-A- 237 023
DE-A- 2 946 860
DE-U- 7 729 450
GB-A- 1 257 736

(73) Patentinhaber: Kühne, Dieter, Lohmühlestrasse 5,
D-7410 Reutlingen(DE)

(72) Erfinder: Kühne, Dieter, Lohmühlestrasse 5,
D-7410 Reutlingen(DE)

(74) Vertreter: Ott, Elmar, Dipl.-Ing., Kappelstrasse 8,
D-7240 Horb 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gewindebohrmaschine gemäß der Gattung des Hauptanspruchs.

Für Präzisions-Gewindebohrungen werden Gewindebohrmaschinen eingesetzt, bei denen der Gewindeschneidvorgang mittels entsprechender Meß- und Überwachungseinrichtungen automatisch durchgeführt wird. Der Schneidvorgang kann beispielsweise bei Drehzahlen im Bereich von 100 bis 2.500 Umdrehungen pro Minute erfolgen.

Aus der DE-PS 29 46 860 ist eine Antriebsvorrichtung für eine Gewindebohrmaschine bekannt, die einen Schrittmotor verwendet, dessen Motorimpulse zur Bestimmung der Gewindetiefe gezählt und ausgewertet werden. Zum Schneiden von Feingewinden wird der Vorschub zweckmäßigerweise durch die Steigung des Gewindebohrers selbst und durch dessen Drehzahl bestimmt. Greift der Gewindebohrer jedoch zu Beginn des Schneidvorganges nicht sofort, so hat dies ein geringfügiges Durchdrehen zur Folge, wobei keine Vertikalbewegung erfolgt. Bei der bekannten Vorrichtung hat dies den gravierenden Nachteil zur Folge, daß zwar einige Motorimpulse des Schrittmotors zu Beginn des Schneidvorganges gezählt werden und daraus ein Spindelhub ermittelt wird, der tatsächlich aufgrund des Durchdrehens nicht erfolgt. Dies führt zwangsläufig zu falschen Gewindetiefen, da der Schneidvorgang vor Erreichen der tatsächlich gewünschten Gewindetiefe beendet wird.

Der Erfindung liegt die Aufgabe zugrunde, eine Gewindebohrmaschine der eingangsgenannten Gattung zu schaffen, bei der auf einfache Weise eine exakte Ermittlung der Gewindetiefe möglich ist.

Die Lösung dieser Aufgabe wird durch die im Hauptanspruch angegebenen Merkmale erhalten. Die vertikale Höhenänderung der Gewindespindel wird mittels eines linearen Weg-Meßsystems gemessen, so daß stets die tatsächliche Position der Meßspindel und damit auch die gewünschte Gewindetiefe ermittelt werden kann. Damit nacheinander mehrere Bohrungen von unterschiedlichem Niveau beginnend mit gleicher Gewindetiefe problemlos ausgeführt werden können, wird unmittelbar nach dem Zentrieren der Gewindespindel vor Beginn des Schneidvorganges der momentane Höhenwert der Gewindespindel auf Null gesetzt. Der Momentanwert kann in einem rücksetzbaren Zähler abgelegt sein. Mit Beginn des Schneidvorganges wird dann die tatsächliche Eindringtiefe des Gewindebohrers und damit die Gewindetiefe unmittelbar gemessen und mit einem die gewünschte Gewindetiefe repräsentierenden Wert, der in einem Speicher abgelegt sein kann, verglichen. Bei Erreichen der gewünschten Gewindetiefe wird die Drehrichtung der Gewindespindel umgekehrt und es kann dann ein erneuter Schneidvorgang beginnen. Als lineares Weg-Meßsystem dient vorzugsweise ein mit dem Antriebsmotor verbundenes optisches Inkrementalmeßsystem, bei dem ein Strichmuster mittels Fotozellen abgetastet wird. Die aus der Abtastung gewonnenen Abtastimpulse können in einem Zähler aufsummiert werden, so daß deren Summe die vertikale Höhenverschiebung repräsentiert. Besonders vorteilhaft ist dabei, daß der Antriebsmotor über ein Federelement oder durch einen Gewichtsausgleich schwebend und damit praktisch masselos aufgehängt ist. Der Vorschub, der beim Schneidvorgang durch die Drehzahl und die Gewindesteigung des Gewindebohrers bestimmt ist, kann somit ohne störende Druck- oder Zugkräfte erfolgen.

Das Weg-Meßsystem ist gemäß einer Weiterbildung der Erfindung mit einem Mikroprozessor verbunden, in den eine gewünschte Gewindetiefe über eine Tastatur eingebbar ist.

Eine besonders vorteilhafte Ausführungsform sieht vor, daß der Schneidvorgang durch Betätigung einer Auslösetaste mit einer geringen Verzögerung eingeleitet wird, und daß gleichzeitig mit Betätigung der Auslösetaste der momentane Höhenwert auf Null gesetzt wird. Es wird also zunächst der stillstehende Gewindebohrer auf die Bohrung aufgesetzt und zentriert, dann wird eine Auslösetaste betätigt, die sofort den momentanen Höhenwert auf Null setzt und nach einer geringen Verzögerung den eigentlichen Schneidvorgang einleitet. Es können somit von unterschiedlichen Höhen ausgehend die gewünschten Gewindetiefen geschnitten werden, wobei lediglich die gewünschte Gewindetiefe eingegeben werden muß. Beim oben beschriebenen Stand der Technik muß dagegen die Gewindesteigung der verschiedenen Gewinde eingegeben werden, da der Vorschub des Gewindebohrers und damit die Eindringtiefe von der Gewindesteigung abhängt. Soll nun ein Spezialgewinde geschnitten werden, welches im Steuerprogramm der bekannten Antriebsvorrichtung nicht berücksichtigt ist, so kann eine exakte Gewindetiefe natürlich auch nicht erreicht werden.

Vorteilhafte Weiterbildungen der Erfindung sind in den übrigen Unteransprüchen gekennzeichnet.

Die Erfindung wird nachfolgend anhand der Zeichnung näher erläutert. Es zeigen:

Figur 1 den grundsätzlichen Aufbau einer erfindungsgemäßen Gewindebohrmaschine,

Figur 2 einen Teil der optischen Meßeinrichtung von oben und

Figur 3 eine perspektivische Teilansicht der optischen Meßeinrichtung.

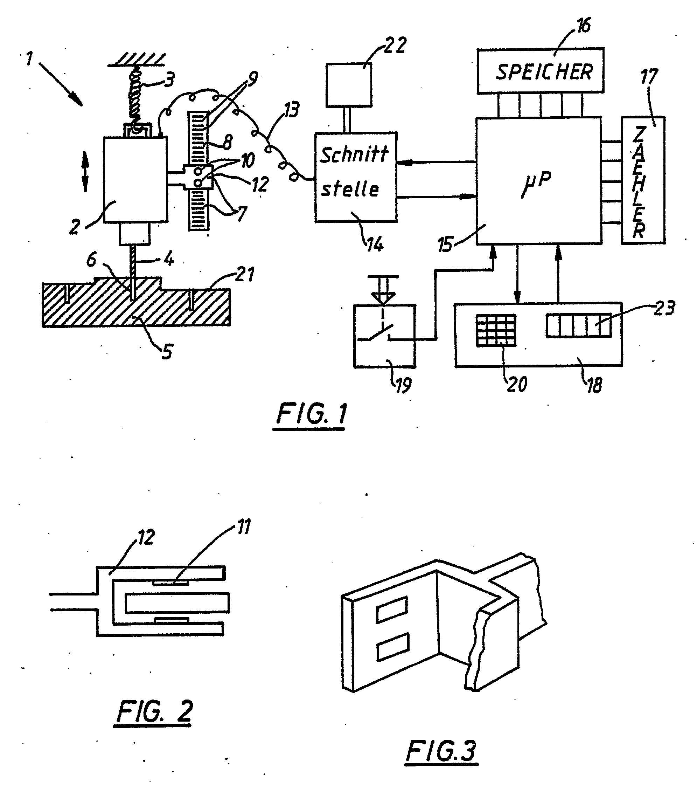

Die in Figur 1 dargestellte Gewindebohrmaschine 1 besitzt einen Antriebsmotor 2, der über ein vereinfacht dargestelltes Federelement 3 schwebend und damit masselos aufgehängt ist. Die Gewindespindel 4 ist auf eine in einem Werkstück 5 eingebrachte Bohrung 6 aufgesetzt und befindet sich somit in der Position, wo der Schneidvorgang beginnen kann. Die momentane vertikale Position der Gewindespindel 4 wird mittels eines optischen Meßsystems 7 ermittelt, welches aus an sich bekannten Einrichtungen bestehen kann. Hier wird eine Metalleiste 8 mit dicht übereinander angeordneten Schlitzen 9 verwendet die optisch mittels Fotozellen 10 abgetastet werden. Auf der hier nicht dargestellten gegenüberliegenden Seite der Metalleiste 8 ist eine Lichtquelle 11 (Figur 2) an einem starr mit dem Antriebsmotor 2 verbundenen Bügel 12 angeordnet.

Der Antriebsmotor 2 ist über eine flexible elektrische Leitung 13 mit einer Schnittstelle 14 verbunden, die insbesondere zur Anpassung der Signale und Informationen dient, die von und zum Mikroprozessor 15 übertragen werden. Dem Mikroprozessor 15 sind als externe Einrichtungen ein Speicher 16, ein Zähler 17, eine Ein-Ausgabeeinheit 18 und eine Auslösetaste 19 zugeordnet.

Befindet sich der Gewindebohrer 4 in der hier dargestellten Position, so wird der Gewinde-Schneidvorgang durch Betätigung der Auslösetaste 19 eingeleitet. Im Speicher 16 wurde zuvor durch Eingabe über eine Tastatur 20 ein Wert abgelegt, der der gewünschten Gewindetiefe entspricht. Mit Betätigung der Auslösetaste 19 veranlaßt der Mikroprozessor 15, daß der Zählerstand des Zählers 17, der stets die momentane Höhenposition der Gewindespindel 4 enthält, auf Null gesetzt wird. Nach einer geringen Verzögerung, die beispielsweise 5 msec betragen kann, veranlaßt der Mikroprozessor 15, daß die Gewindespindel 14 in Rotation versetzt und das Gewinde in die Bohrung 6 geschnitten wird. Die Gewindespindel 4 dringt selbsttätig aufgrund ihrer Gewindesteigung in die Bohrung 6 ein, wobei die Eindringtiefe über die optische Meßeinrichtung 7 durch Aufsummierung von Zählimpulsen im Zähler 17 festgehalten wird. Erreicht der Zähler 17 einen Wert, der dem im Speicher 16 abgelegten Wert entspricht, so veranlaßt der Mikroprozessor 15 eine Drehrichtungsumkehr bis die Gewindespindel 4 wieder aus der Gewindebohrung entfernt ist. Die Gewindespindel 4 kann dann beispielsweise auf die Bohrung 21 aufgesetzt werden und durch Auslösung der Auslösetaste 19 wird dann ein erneuter Schneidvorgang in der beschriebenen Weise eingeleitet.

An der Schnittstelle 14 ist noch eine Strom-Überwachungseinrichtung 22 angeschlossen, die bei Überschreiten eines vorgegebenen maximalen Stromes eine kurzzeitige Drehrichtungsumkehr der Gewindespindel 4 veranlaßt, um dann den Schneidvorgang wieder fortzusetzen. Diese Maßnahme dient dazu, daß durch eine unzulässige Erhöhung des Drehmoments, aufgrund von Spanbildung, eine Materialzerstörung vermieden wird. Das zulässige maximale Drehmoment kann über die Tastatur 20 ebenso wie die gewünschte Gewindetiefe, eine gewünschte Drehzahl und dergleichen eingegeben werden. Die Eingabewerte können an einer digitalen Anzeige 23 angezeigt werden.

**Patentansprüche**

1. Gewindebohrmaschine mit einem elektrischen Antriebsmotor (2) für die Gewindespindel (4) und mit einer Meßeinrichtung zur Bestimmung deren vertikaler Position, wobei zu Beginn des Schneidvorganges der momentane Höhenwert der Gewindespindel (4) auf Null gesetzt und bei Erreichen der vorgegebenen Gewindetiefe die Drehrichtung der Gewindespindel (4) umgekehrt wird, dadurch gekennzeichnet, daß die vertikale Höhenänderung mittels eines linearen Weg-Meßsystems (7) gemessen und mit einer in einem Speicher (16) abgelegten, vorgegebenen Gewindetiefe verglichen wird, und daß das Gewicht des Antriebsmotors (2) mittels Federn (3) und/oder Gewichten ausgeglichen ist und der Vorschub der Gewindespindel (4) aufgrund der Eigenführung durch die Gewindesteigung erfolgt.

2. Gewindebohrmaschine nach Anspruch 1, dadurch gekennzeichnet, daß als lineares Weg-Meßsystem ein mit dem Antriebsmotor (2) verbundenes optisches und/oder induktives Inkrementalmeßsystem dient.

3. Gewindebohrmaschine nach einem der Ansprüche 1 oder 2, dadurch gekennzeichnet, daß das Weg-Meßsystem (7) mit einem Mikroprozessor (15) verbunden ist, in den eine gewünschte Gewindetiefe über eine Tastatur (20) eingebbar ist.

4. Gewindebohrmaschine nach einem der vorhergehenden Ansprüche, dadurch gekennzeichnet, daß der Schneidvorgang durch Betätigung einer Auslösetaste (19) mit einer geringen Verzögerung eingeleitet wird, und daß gleichzeitig mit Betätigung der Auslösetaste (19) der momentane Höhenwert auf Null gesetzt wird.

5. Gewindebohrmaschine nach Anspruch 4, dadurch gekennzeichnet, daß der Schneidvorgang mit einer Verzögerung von wenigen Millisekunden nach Betätigung der Auslösetaste (19) beginnt.

6. Gewindebohrmaschine nach einem der vorhergehenden Ansprüche, dadurch gekennzeichnet, daß als Antriebsmotor (2) ein in der Drehzahl einstellbarer Schrittmotor oder ein Gleichstrommotor dient.

7. Gewindebohrmaschine nach einem der vorhergehenden Ansprüche, dadurch gekennzeichnet, daß eine Strom-Überwachungseinrichtung (22) vorgesehen ist, die bei Erreichen eines maximalen Stroms eine kurzzeitige Drehrichtungsumkehr der Gewindespindel 4 einleitet.

**Claims**

1. Tapping machine with an electric drive motor (2) for the threaded spindle (4) and with a measuring device for determining the vertical position thereof, in which at the start of the tapping process the instantaneous height value of the threaded spindle (4) is set to zero and on reaching the predetermined thread depth the rotation direction of threaded spindle (4) is reversed, characterized in that the vertical height change is measured by means of a linear path measuring system (7) and is compared with a predetermined thread depth filed in a memory (16) and that the weight of the drive motor (2) is compensated by means of springs (3) and/or weights and the advance of the threaded spindle (4) takes place through control by the thread lead.

2. Tapping machine according to claim 1, characterized in that the linear distance measuring system is constituted by an optical and/or inductive incremental measuring system connected to the drive motor (2).

3. Tapping machine according to one of the claims 1 or 2, characterized in that the path measuring system (7) is connected to a microprocessor (15), into which is inputted by means of a keyboard (20) a desired thread depth.

4. Tapping machine according to one of the preceding claims, characterized in that the tapping process is initiated by operating a release key (19) with a slight time lag and that simultaneously with the operation of the release key (19) the instantaneous height value is set to zero.

5. Tapping machine according to claim 4, characterized in that the tapping process starts with a time lag of a few milliseconds following the operation of the release key (19).

6. Tapping machine according to one of the preceding claims, characterized in that the drive motor (2) is constituted by a speed-adjustable stepping motor or a direct current motor.

7. Tapping machine according to one of the preceding claims, characterized in that a current monitoring device (22) is provided which, on reaching a maximum current, initiates a brief rotation direction reversal of the threaded spindle (4).

## Revendications

1. Machine à tarauder comportant un moteur (2) électrique d'entraînement destiné au taraud (4), et un dispositif de mesure destiné à déterminer quelle est la position verticale de ce taraud, la valeur instantanée de hauteur du taraud 4 étant mise à zéro au début de l'opération de coupe, et le sens de rotation étant inversé au moment où la profondeur ou longueur de filetage donnée à l'avance est atteinte , machine caractérisée en ce que la variation verticale de hauteur est mesurée au moyen d'un système (7) de mesure de déplacement linéaire et en ce qu'elle est comparée avec une profondeur ou longueur de filetage donnée à l'avance et enregistrée dans une mémoire (16), et en ce que le poids du moteur (2) d'entraînement est compensé au moyen de ressorts (3) et/ou de poids, et en ce que l'avance du taraud (4) s'effectue en raison de son guidage propre à l'aide du pas de filetage.

2. Machine à tarauder selon la revendication 1, caractérisée en ce qu'un système optique relié au moteur (2) d'entraînement et/ou un système inductif de mesure incrémentielle sert de système de mesure de déplacement linéaire.

3. Machine à tarauder selon une des revendications 1 ou 2, caractérisée en ce que le système (7) de mesure de déplacement est relié à un microprocesseur (15) dans lequel on peut introduire comme donnée, à l'aide d'un clavier (20) à touches, une profondeur ou longueur de filetage souhaitée.

4. Machine à tarauder selon une des précédentes revendications, caractérisée en ce que l'opération de coupe est déclenchée avec un léger retard par l'actionnement d'une touche (19) de déclenchement, et en ce qu'en même temps que l'actionnement de la touche (19) de déclenchement, la valeur instantanée de hauteur est mise à zéro.

5. Machine à tarauder selon la revendication 4, caractérisée en ce que l'opération de coupe commence avec un retard de quelques millisecondes après l'actionnement de la touche (19) de déclenchement.

6. Machine selon une des revendications précédentes, caractérisée en ce que l'on utilise, comme moteur (2) d'entraînement, un moteur pas-à-pas dont la vitesse de rotation est réglable ou un moteur à courant continu.

7. Machine à tarauder selon une des revendications précédentes, caractérisée en ce qu'on prévoit un dispositif (22) de surveillance de courant, qui, lorsqu'un courant maximal est atteint, provoque une inversion de courte durée du sens de rotation du taraud (4).

_FIG. 1_

_FIG. 2_

_FIG.3_